# EUROPEAN PATENT APPLICATION

(11) **EP 4 635 832 A1**
(43) Date of publication of application: **22.10.2025**
(21) Application number: 25167755.5
(22) Date of filing: 01.04.2025
(51) Int. Cl.: B62H 1/02, B62H 5/14

(54) **LOCK AND BICYCLE**

(30) Priority: 03.04.2024 CN 202410399817; 10.09.2024 CN 202422213743 U; 25.02.2025 CN 202510212266
(71) Applicant: Zhejiang Jiahong Sports Equipment Co., Ltd, Lishui, Zhejiang 321400 (CN)
(72) Inventor: Liu, Zhiqiang, Lishui, Zhejiang, 321400 (CN); Song, Shunkang, Lishui, Zhejiang, 321400 (CN); Zhang, Jianwei, Lishui, Zhejiang, 321400 (CN)
(74) Representative: Petraz, Gilberto Luigi

(57) **Abstract**

A lock (100) and a bicycle (10) are provided. The lock (100) includes a power source (110), a driving block (120), a driven assembly (130) and an elastic transmission (140). The driving block (120) is connected to the power source (110) in a transmission manner. The driving block (120) is capable of moving between a first position and a second position under drive of the power source (110). The driven assembly (130) includes a driven block (131) and a latching tongue (132) connected to each other, and the driven assembly (130) is capable of moving between a locking position and an unlocking position. The elastic transmission component (140) is connected between the driving block (120) and the driven block (131) in a transmission manner, and when the driving block (120) is disposed on the second position, the elastic transmission component (140) has a tendency to drive the driven assembly (130) to move to the locking position.

## Description

### CROSS-REFERENCE TO RELATED APPLICATIONS

This application claims priority to Chinese patent application Nos. 202510212266.0, filed on February 25, 2025, and titled "LOCK AND BICYCLE", 202410399817.4, filed on April 3, 2024, and titled "ELECTRICALLY CONTROLLING HOOK LOCK FOR BICYCLE", and 202422213743.9, filed on September 10, 2024, and titled "HOOK LOCK FOR BICYCLE". The contents of the above identified applications are hereby incorporated herein in their entireties by reference.

### TECHNICAL FIELD

The present application relates to the field of vehicle technology, and in particular, to an electric assisted bicycle field, specifically, to a lock and a bicycle.

### BACKGROUND

Since a bicycle is required to frequently stop outside, a bicycle lock is useful to prevent theft by restricting movement using a physical or electrical method. There are many bicycle locks with different theft prevention, portability, and suitability.

A hub is provided with a locking hole to lock, which is popular due to no additional external space, easy to operate, and difficult to disable. However, the lock generally requires a strong mechanical alignment dependency, i.e., a latching tongue is required to be strictly aligned with the locking hole before locking. If the latching tongue is not strictly aligned with the locking hole when a wheel rotates, adjustment is required before locking, resulting in poor user experience and potential security risks. An electrical lock uses electromagnetic drive for locking. If the latching tongue is not aligned with the locking hole when the latching tongue is triggered, the latching tongue can wear easily or the motor can stall, thereby reducing reliability and resulting in potential damage with long-term use. Due to an extensive use of electronic control operations for electric assisted bicycles, manual debugging is required, bringing greater inconvenience to the user.

### SUMMARY

Based on this, it is necessary to provide a lock and a bicycle to address problems of inconvenient use and damage in existing technologies.

A lock includes a power source, a driving block, a driven block and an elastic transmission component. The driving block is connected to the power source in a transmission manner. The driving block is capable of moving between a first position and a second position under drive of the power source. The driven assembly includes a driven block and a latching tongue connected to each other. The driven assembly is capable of moving between a locking position and an unlocking position. The elastic transmission component is connected between the driving block and the driven block in a transmission manner. When the driving block is disposed on the second position, the elastic transmission component has a tendency to drive the driven assembly to move to the locking position.

**In** an embodiment, when the driving block moves between the first position and the second position. The driving block is capable of moving along an axis of the elastic transmission component. Alternatively, when the driven assembly moves between the locking position and the unlocking position, the driven assembly is capable of moving along an axis of the elastic transmission component.

**In** an embodiment, the elastic transmission component is disposed on a path where the driving block moves from the first position to the second position and from the second position to the first position. The elastic transmission component is disposed on a path where the driving block moves from the locking position to the unlocking position and from the unlocking position to the locking position.

**In** an embodiment, the driven block is provided with a groove, a part of the elastic transmission component is disposed in the groove. The driving block is provided with an accommodating groove along an axis of the elastic transmission component and an abutting groove in communication with the accommodating groove. A part of the driven block is inserted into the accommodating groove. At least part of the elastic transmission component protruding from the groove is located in the abutting groove.

**In** an embodiment, the driven block includes two positioning blocks. The two positioning blocks protrudes from two groove walls of the groove opposite to each other along the axis of the elastic transmission component. The two positioning blocks are separated from each other along the axis of the elastic transmission component. Two ends of the elastic transmission component are sleeved on peripheries of the two positioning blocks, respectively.

**In** an embodiment, a size of each of the two positioning blocks decreases along a direction from a groove wall of the groove to the other of the two positioning blocks.

In an embodiment, the lock further includes a first position detecting component. The first position detecting component is disposed on a side of a path where the driven assembly moves between the locking position and the unlocking position. The first position detecting component is configured to be triggered when the driven assembly is disposed on the unlocking position. Alternatively, the lock further includes a second position detecting component. The second position detecting component is disposed on a side of a path where the driven assembly moves between the locking position and the unlocking position. The second position detecting component is configured to be triggered when the driven assembly is disposed on the unlocking position.

In an embodiment, the first position detecting component is disposed on an extending path of a path where the driven assembly moves from the locking position to the unlocking position. The driven assembly abuts against the first position detecting component when the driven assembly is disposed on the unlocking position.

In an embodiment, the lock includes an elastic component. The elastic component is configured to act on the driven assembly. The elastic component has a tendency to drive the driven assembly to move to the unlocking position.

In an embodiment, the lock includes a housing. The driving block and the driven block are both disposed in the housing. When the driven block is disposed on the locking position, at least part of the latching tongue extends outside the housing.

In an embodiment, a gap is defined between the driving block disposed on the first position and an inner wall of the housing, and the driving block is capable of moving along an extending path of a path where the driving block moves from the second position to the first position. Alternatively, a gap is defined between the driving block disposed on the second position and an inner wall of the housing, and the driving block is capable of moving along an extending path of a path where the driving block moves from the first position to the second position.

In an embodiment, the lock further includes a transmission gear set. The transmission gear set is connected to the power source and the driving block in a transmission manner. The driving block is provided with teeth configured to be engaged with the transmission gear set. When the driving block moves along the extending path of the path where the driving block moves from the second position to the first position and/or from the first position to the second position. The teeth is capable of being detached from the transmission gear set.

A bicycle includes a frame, a rear wheel, a hook and a lock disc. The hook is connected between the frame and the rear wheel. The lock disc is coaxially and rotatably disposed with the rear wheel. The bicycle further includes a lock of any one of above embodiments. The lock is connected to the hook. A periphery of the lock disc is provided with at least one locking hole fitting with the latching tongue.

In an embodiment, a periphery of the latching tongue is provided with a restricting groove. The lock further includes a movable restricting assembly. The restricting assembly fits with the restricting groove of the latching tongue disposed at the unlocking position. The restricting assembly is capable of moving relative to the latching tongue to partially insert into the restricting groove and retract from the restricting groove.

In an embodiment, the bicycle includes a kickstand rotatably connected to the frame. The kickstand is capable of rotating between a retracted position and a standing position. The restricting assembly is disposed on a path where the kickstand moves from a standing position to a retracted position, resulting in the restricting assembly is driven to partially insert into the restricting groove during a process of the kickstand moving to the retracted position.

In an embodiment, the lock further includes a first elastic reset component. The first elastic reset component is capable of acting on the restricting assembly and has a tendency to drive the restricting assembly to retract from the restricting groove.

In the lock provided in the above solution, the driving block is connected to the driven block in a transmission manner by providing the elastic transmission component between the driving block and the driven block. In one hand, a lock time is not limited by that the locking hole is aligned with the latching tongue, the lock may realize a preset lock when the locking hole is not aligned with the latching tongue, and the bicycle is immediately locked when the locking disc rotates, thereby ensuring a safety and improving convenience for using the lock. In other hand, an elastic transmission between the driving block and the driven block is compared with a rigid connection between the driving block and the driven block, if the driving block is disposed on the first position or the second position, but the power source fail to stop outputting torque to keep rotating, the elastic transmission component is regarded as a transmission component to preventing the transmission gear set and the teeth from being squeezed to damage or the power source from overloading to damage, and the elastic transmission component after being compressed may utilize an elastic force to rest the teeth and the transmission gear set to maintain a state of the teeth engaged with the transmission gear set, resulting in reducing damage of the power source or the machine structure and prolonging a service life.

Details of one or more embodiments of this application are presented in the attached drawings and descriptions below. And other features, purposes and advantages of this application will become apparent from the description, drawings and claims.

### BRIEF DESCRIPTION OF THE DRAWINGS

For a better description and illustration of embodiments and/or examples of those applications disclosed herein, reference may be made to one or more attached drawings. Additional details or examples used to describe the drawings should not be considered as limiting the scope of any of the disclosed applications, currently described embodiments and/or examples, and currently understood best modes of these applications.
FIG. 1 is a partial schematic diagram of a bicycle in an embodiment of the present application.
FIG. 2 is a schematic diagram of a lock of the bicycle and a locking disc of the bicycle in FIG. 1.
FIG. 3 is an exploded diagram of the lock in FIG. 2.
FIG. 4 is a cross-sectional diagram of the lock in FIG. 3.
FIG. 5 is a partial schematic diagram of the lock in FIG. 3 in an embodiment.
FIG. 6 is a partial schematic diagram of the lock in FIG. 3 in an embodiment.
FIG. 7 is an exploded diagram of a driving block of the lock, a driven assembly of the lock and an elastic transmission component of the lock in FIG. 3.
FIG. 8 is a schematic diagram of a driving block of the lock, a driven assembly of the lock and an elastic transmission component of the lock in FIG. 3.
FIG. 9 is a schematic diagram of a cross-sectional structure at A-A in FIG. 8.
FIG. 10 is a partial schematic diagram of a bicycle in another embodiment of the present application.
FIG. 11 is a schematic diagram of a lock of the bicycle in FIG. 10.
FIG. 12 is a schematic diagram of the lock of the bicycle in FIG. 10 in a state.
FIG. 13 is a schematic diagram of the lock of the bicycle in FIG. 10 in another state.

Reference signs are as follows:
10 represents a bicycle; 100 represents a lock; 110 represents a power source; 120 represents a driving block; 121 represent an accommodating groove; 122 represents an abutting groove; 123 represents teeth; 130 represents a driven assembly; 131 represents a driven block; 1311 represents a groove; 1312 represents a positioning block; 132 represents a latching tongue; 1321 represents a restricting groove; 140 represents an elastic transmission component; 151 represents a first position detecting component; 152 represents a second position detecting component; 160 represents an elastic component; 170 represents a housing; 180 represents a transmission gear set; 191 represents a restricting assembly; 1911 represents a restricting position; 1912 represents a transmission portion; 192 represents a first elastic reset component; 193 represents a connecting housing; 194 represents a second elastic reset component; 200 represents a frame; 300 represents a hook; 400 represents a back wheel; 500 represents a locking disc; 510 represents a locking hole; and 600 represents a kickstand.

### DETAILED DESCRIPTION

In order to make above objectives, features, and advantages of the present application more obvious and understandable, a detailed explanation of the specific implementation of the present application will be provided below in combination with drawings. Many specific details are elaborated in following description to facilitate a thorough understanding of the present application. A specific implementation described here is only for the purpose of explaining the present application and does not limit a scope of protection of the present application.

In a description of the present application, it should be understood that, a directional or positional relationship indicated by terms "center", "machine direction", "cross direction", "length", "width", "thickness", "up", "down", "front", "back", "left", "right", "vertical", "horizontal", "top", "bottom", inner", "outer", "clockwise", "counterclockwise", "axial", "radial", "circumferential" and so on is based on a directional or positional relationship shown in the drawings, it is only for the convenience of describing the present application and simplifying the description, and does not indicate or imply that the device or component referred to must have a specific orientation, be constructed and operated in a specific orientation, and therefore cannot be understood as a limitation of the present application.

In addition, the terms "first" and "second" are only used to describe the purpose and can not be understood as indicating or implying relative importance or implying the quantity of indicated technical features. Therefore, the features limited to "first" and "second" can explicitly or implicitly include at least one of these features. In the description of the present application, "multiple" means at least two, such as two, three, etc., unless there is an otherwise specific limitation.

In the present application, unless there is the otherwise specifications and limitations, if there are terms "install", "combine", "connect", "fix" and so on, the terms should be broadly understood. For example, it may be fixing connection, or may be a detachable connection, or integrated connection. It may be a mechanical connection or an electrical connection. It may be directly connected or indirectly connected through an intermediate medium, and can be a connection within two components or an interaction relationship between two components, unless otherwise specified. For ordinary skill in this art, it may understand a specific meaning of the terms in the present application according to a specific situation.

In the present application, unless there is the otherwise specifications and limitations, the first feature is "above" or "below" the second feature which may be a direct contact between the first and second features, or the first features and the second features may be in indirect contact through an intermediate medium. Moreover, the first feature is "on", "above", and "over" the second feature can be that the first feature is directly or diagonally above the second feature, or only indicates that the first feature is horizontally higher than the second feature. The first feature is "beneath", "below", and "under" the second feature can be that the first feature is directly or diagonally below the second feature, or only indicate that the horizontal height of the first feature is less than that of the second feature.

It should be noted that, when a member is considered "fixed on" or "set on" another member, it can be directly fixed to another member or there may be a centered member present simultaneously. When a member is considered "connected to" another member, it can be directly connected to another member or there may be a centered member present simultaneously. The terms "vertical", "horizontal", "left", "right" and similar expressions used in the specification of the present application are for illustrative purposes only and do not represent the only implementation method.

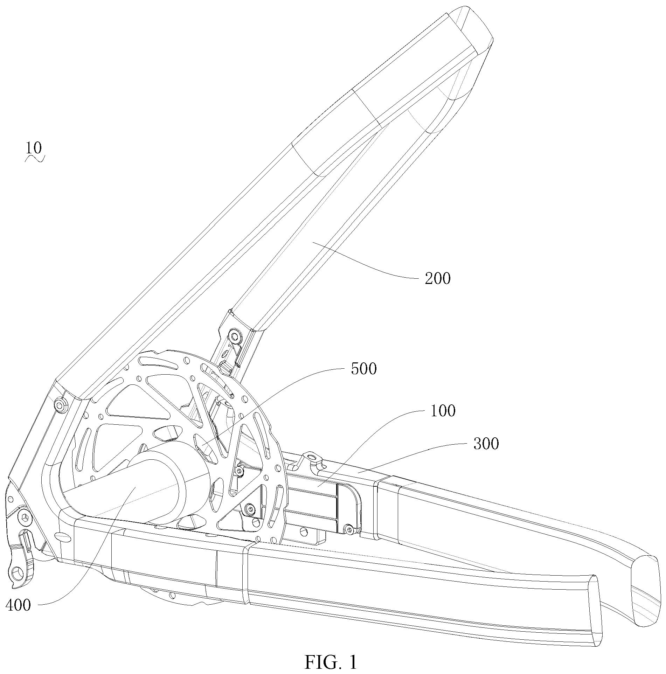

FIG. 1 illustrates a partial schematic diagram of a bicycle 10 in an embodiment of the present application. In an embodiment of the present application, the bicycle 10 is provided. The bicycle 10 may be any one of shared bicycles, electric bicycles, three wheeled bicycles, four wheeled bicycles and so on, which is not limited herein. One part of components of the bicycle 10 is configured to illustrate in drawings of the present application, and the other part of the components of the bicycle 10 may be not limited.

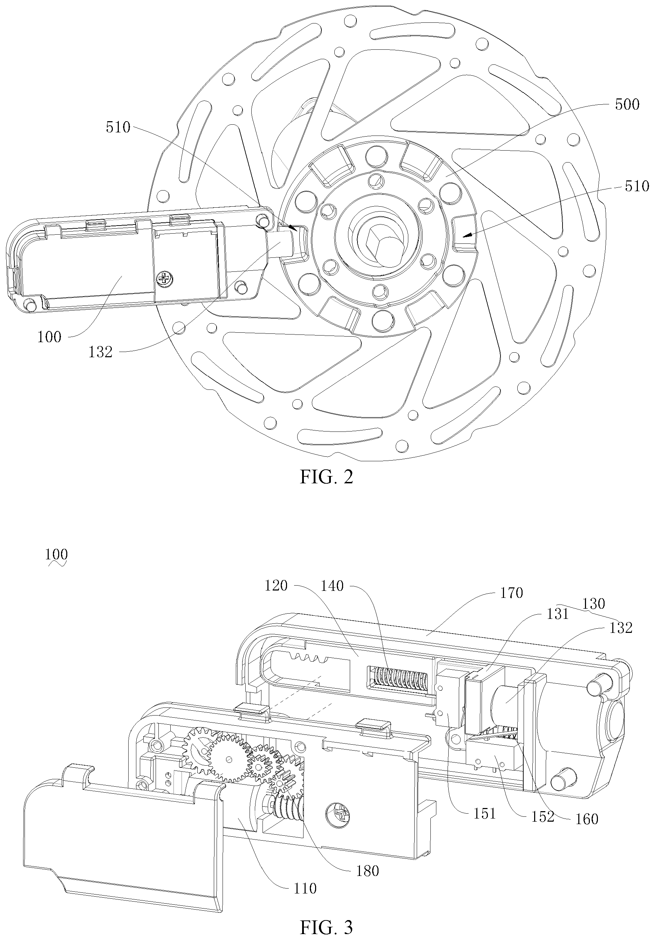

Referring to FIG. 1, the bicycle 10 includes a frame 200, a rear wheel 400, a hook 300 and a locking disc 500. The locking disc 300 is connected between the frame 200 and the rear wheel 400. In the drawings of the present application, a rotating shaft of the rear wheel 400 is illustrated as a position example, referring to FIG. 2, the locking disc 500 is coaxially and rotatably connected to the rear wheel 400. Referring to FIG. 1 and FIG. 2, the bicycle 10 further includes a lock 100 of any one of following embodiments. The lock 100 is connected to the hook 300. Referring to FIG. 1, the lock 100 is disposed in an inner side of the hook 300, the lock 100 is hard to be observed from an external environment, such that the lock 100 may realize a hidden installation, resulting in improving an overall appearance of the bicycle 10. Referring to FIG. 2, a periphery of the locking disc 500 is provided with at least one locking hole 510 of the latching tongue 132 fitting with the lock 100. Referring to FIG. 2, in the present embodiment, the locking disc 500 is provided with a plurality of locking holes 510 distributed along a circumference of the locking disc 500. Each of the plurality of the locking holes 510 extends along a diameter of the locking disc 500. In the present embodiment, a gap between adjacent two of the plurality of locking holes 510 is the same. In FIG. 2, for example, the locking disc 500 is provided with six locking holes, which is not regarded as a limitation, and the number of the locking hole 510 is not limited.

Referring to FIG. 3, in an embodiment of the present application, a lock 100 is provided. The lock 100 includes a power source 110, a driving block 120, a driven assembly 130 and an elastic transmission component 140. The power source 110 is configured to provide a power to drive the driving block 120. In the present embodiment, the power source 110 is a driving motor, which is not limited. In other embodiments, the power source 110 may be other machines, such as a combustion engine and so on.

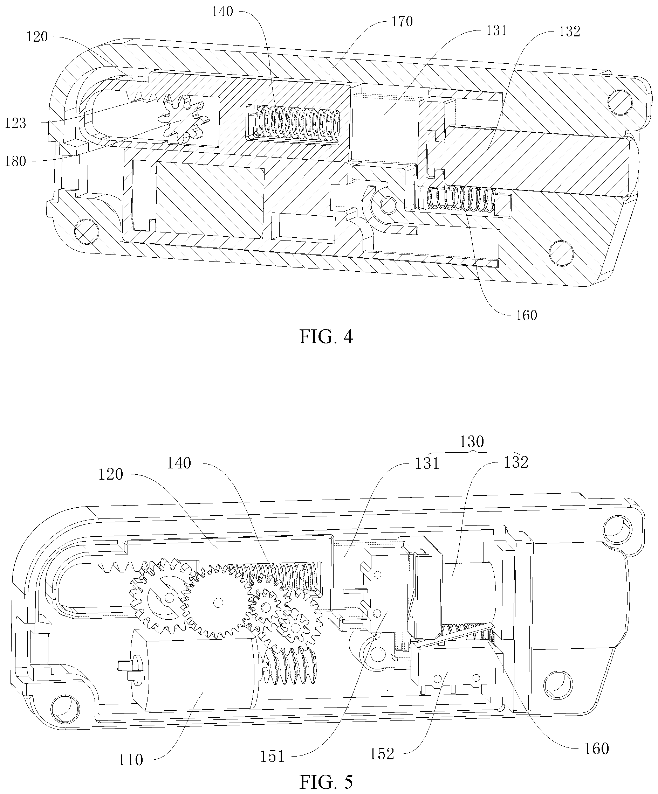

The driving block 120 is connected to the power source in a transmission manner. Referring to FIGs. 3 and 4, in an embodiment, the lock 100 further includes a transmission gear set 180. The transmission gear set 180 is connected to the power source 110 and the driving block 120 in a transmission manner. In the present embodiment, the transmission gear set 180 includes a plurality of gears engaging with each other, which may form a reduction gear set. Referring to FIGs. 3 and 4, the driving block is provided with a teeth 123 configured to be engaged with the transmission gear set 180, resulting in the power source 110 is capable of driving a plurality of second-stage gears including second-stage turbine, and then the driving block 120 is driven to move. In other embodiments, the power source 110 may be connected to the driving block 120 by other transmission structures or by itself.

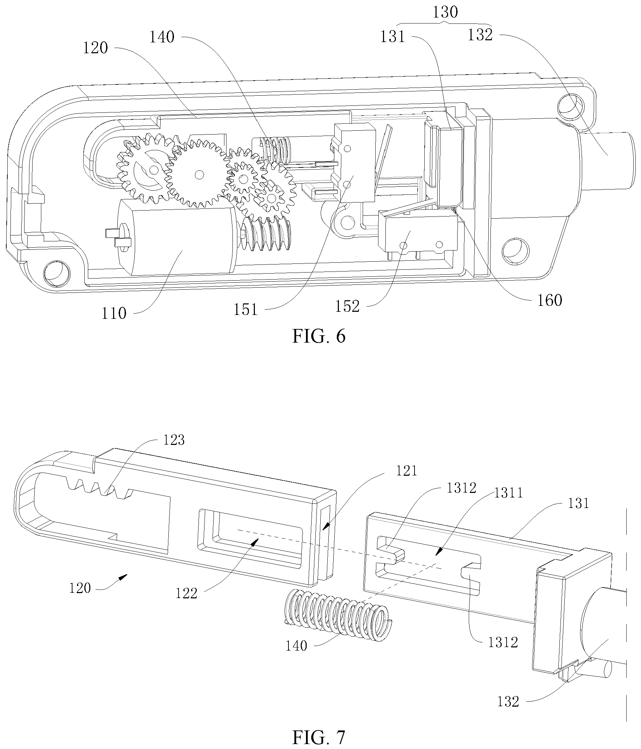

Referring to FIGs. 5 and 6, the driving block 120 may move between the first position shown in FIG. 5 and the second position shown in FIG. 6. The driven assembly 130 includes a driven block 131 and a latching tongue 132 connected to each other. The driven assembly 130 may move between the locking position shown in FIG. 6 and the unlocking position shown in FIG. 5.

Referring to FIGs. 5 and 6, in an embodiment, the lock 100 further includes a housing 170. The driving block 120 and the driven block 131 are both disposed in the housing 170. When the driven block 131 is disposed at the locking position, at least part of the latching tongue 132 extends outside the housing 170, facilitating the latching tongue 132 inserting into the locking hole 510 located on an outer part the housing 170. In the present embodiment, the power source 110 and the transmission gear set 180 may be disposed in the housing 170, which is not limited.

Referring to FIGs. 3 to 5, the transmission portion 140 is connected between the driving block 120 and the driven block 131 in a transmission manner. The driving block 120 can move to deform the elastic transmission component 140. The elastic transmission component 140 can deform to form an elastic force, resulting in driving the driven block 131 to move. Correspondingly, the elastic transmission component 140 is configured to act a force on the driving block 120, since the force of the elastic transmission component 140 configured to act on the driving block 120 is less than a force where the teeth 123 is engaged with the transmission gear set 180, the elastic transmission component 140 is configured to drive the driven block 131 to move between the locking position and the unlocking position in a process of normally locking and unlocking.

When the driving block 120 is disposed at a second position shown in FIG. 6, the elastic transmission component 140 has a tendency to drive the driven assembly 130 to move to the locking position, if the locking hole 510 is aligned with the latching tongue 132, the elastic transmission component 140 may drive the driven assembly 130 to move to the locking position, the latching tongue 132 is partially inserted into the locking hole 510 to lock the bicycle 10. If the locking hole 510 is not aligned with the latching tongue 132, the elastic transmission component 140 remains an elastic force for driving the driven assembly 132 to move to the locking position until the locking disc 500 rotates to a position where the locking hole 510 is aligned with the latching tongue 132, the driven assembly 130 is driven to move to the locking position, so that the bicycle 10 is locked.

In an embodiment, when the driving block 120 moves between the first position shown in FIG. 5 and the second position shown in FIG. 6, the driving block 120 can move along an axis of the elastic transmission component 140, and the driving block 120 may compress the elastic transmission component 140.

In an embodiment, when the driven assembly 130 moves between the locking position shown in FIG. 6 and the unlocking position shown in FIG. 5, the driven assembly 130 can move along the axis of the elastic transmission component 140, and a direction of the elastic transmission component 140 configured to act on the driven assembly 130 is coaxially with a direction where the driven assembly 130 moves between the locking position and the unlocking position.

Referring to FIGs. 5 to 8, in an embodiment, the elastic transmission component 140 is disposed on a path where the driving block 120 moves from the first position shown in FIG. 5 to the second position shown in FIG. 6 and from the second position to the first position. The elastic transmission component 140 is disposed on a path where the driving block 120 moves from the locking position to the unlocking position and from the unlocking position to the locking position. When the driving block 120 moves relative to the driven block 131, i.e., a direction from the first position shown in FIG. 5 to the second position shown in FIG. 6 and/or from the second position to the first position, the driving block 120 can always compress the elastic transmission component 140, such that the elastic transmission component 140 generates an elastic force to drive the driven block 131 and the driving block 120 to move coaxially or drive the driving block 120 to reset.

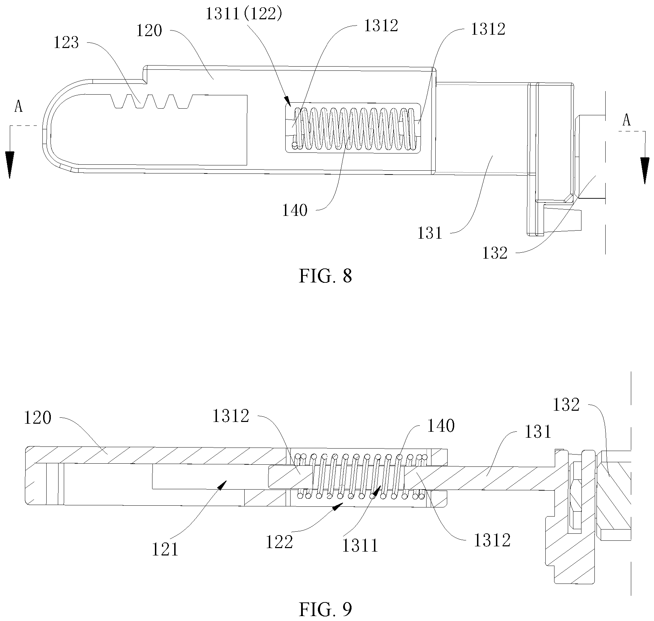

Referring to FIGs. 7 to 9, in an embodiment, the driven block 131 is provided with a groove 1311. A part of the elastic transmission component 140 is disposed in the groove 1311. The elastic transmission component 140 is coaxially disposed with a movement direction of the driven block 131 and the driving block 120. Referring to FIGs. 7 and 9, the driving block 120 is provided with an accommodating groove 121 along the axis of the elastic transmission component 140 and an abutting groove 122 in communication with the accommodating groove 121. Referring to FIGs. 8 and 9, a part of the driven block 131 is inserted into the accommodating groove 121, at least part of the elastic transmission component 140 protruding from the groove 1311 is located in the abutting groove 122, such that when the driving block 120 moves, the driving block 120 may compress the elastic transmission component 140, resulting in generating an elastic force.

Referring to FIGs. 7 and 9, in an embodiment, the driven block 131 includes two positioning blocks 1312. The two positioning blocks 1312 protrude from two groove walls of the groove 1311 relative to each other along the axis of the elastic transmission component 140, respectively. The two positioning blocks 1312 are separated from each other along the axis of the elastic transmission component 140. Two ends of the elastic transmission component 140 are sleeved on peripheries of the two positioning blocks 1312, respectively, facilitating mounting the elastic transmission component 140 between the two positioning blocks 1312. A process of mounting is easy and does not damage for user's hand. The elastic transmission component 140 after mounting is stable and hard to detach from the two positioning blocks 1312.

Referring to FIG. 7, in an embodiment, a size of each of the two positioning blocks 1312 decreases along a direction from a groove wall of the groove 1311 to the other of the two positioning blocks 1312, facilitating mounting the elastic transmission component 140. In the present embodiment, a size of the positioning block 1312 decreases in opposite planes from two sides, forming four edges. Four edges of each of the two positioning blocks 1312 are sleeved on and connected to an inner side of the elastic transmission component 140, such as a spring, facilitating realizing a better fixation. In other embodiments, the positioning block 1312 may be conical, frustum-shaped and so on, such that the positioning block 1312 abuts against an inner wall of the elastic transmission component 140, ensuring connecting stability between the elastic transmission component 140 and the positioning block 1312.

Referring to FIGs. 3, 5 and 6, in an embodiment, the lock 100 further includes a first position detecting component 151. The first position detecting component 151 is disposed on a side of a path where the driven assembly 130 moves between the unlocking position and the locking position. The first position detecting component 151 is configured to be triggered when the driven assembly 130 is disposed at the unlocking position, such that the user may confirm a position of the driven assembly 130 according to a signal of the first position detecting component 151.

In an embodiment, the lock 100 further includes a second position detecting component 152. The second position detecting component 152 is disposed on a side of a path where the driven assembly 130 moves between the locking position and the unlocking position. The second position detecting component 152 is configured to be triggered when the driven assembly 130 is disposed at the locking position, such that the user may confirm a state of the lock 100 according to a signal of the second position detecting component 152 combining the signal of the first position detecting component 151 and a signal of the power source 110.

For example, when the power source 110 is in operation and may drive the driving block 120 to move towards the second position, if the locking hole 510 is aligned with the latching tongue 132, the elastic transmission component 140 may directly drive the driven assembly 130 to move to the locking position and trigger the second position detecting component 152. The power source 110 is in operation and configured to lock, the first position detecting component 151 is not triggered, and the second position detecting component 152 is triggered, such that the lock 100 is disposed at a locking state.

When the power source 110 is in operation and may drive the driving block 120 to move towards the second position, if the locking hole 510 is not aligned with the latching tongue 132, the elastic transmission component 140 may not directly drive the driven assembly 130 to move to the locking position, and the first position detecting component 151 is in a triggered state. When the power source 110 is in operation and configured to lock, the first position detecting component 151 is triggered, and the second position detecting component 152 is not triggered, such that the lock 100 is disposed at a preset-locking state, i.e., when the locking disc 500 rotates to a position where the locking hole 510 is aligned with the latching tongue 132, the lock 100 is automatically switched to the locking state.

When the power source 110 is in operation and may drive the driving block 120 to move towards the first position detecting component 120, the elastic transmission component 140 may drive the driven assembly 130 to move to the unlocking position, and the first position detecting component 151 is switched to the triggered state. The power source 110 is in operation and configured to unlock, the first position detecting component 151 is triggered, and the second position detecting component 152 is not triggered, such that the lock 100 is disposed at an unlocking state.

The type of the first position detecting component 151 and the second position detecting component 152 is not limited, which may be a pressure type limit switch, a Hall effect sensor, or any other objects that may monitor the position. In the drawings of the present application, for example, the first position detecting component 151 and the second position detecting component 152 are both pressure type limit switches, which is not limited, and the first position detecting component 151 and the second position detecting component 152 are not limited to the same type of the position detecting component.

In the present embodiment, the second position detecting component 152 is disposed down the driven block 131. The second position detecting component 152 is a pressure-type limit switch. A presser of the second position detecting component 131 is disposed on the path where the driven block 131 moves to the locking position. The presser may trigger a position signal when the driven block 131 is disposed at the locking position.

Referring to FIGs. 3, 5 and 6, in an embodiment, the first position detecting component 151 is disposed on an extending path of a path where the driven assembly 130 moves from a locking position shown in FIG. 6 and an unlocking position shown in FIG. 5, and the driven assembly 130 disposed at the unlocking position shown in FIG. 5 abuts against the first position detecting component 151, such that a position of the driven assembly 131 is restricted by the first position detecting component 151.

Referring to FIGs. 3 and 4, in an embodiment, the lock 100 further includes an elastic component 160. The elastic component 160 may act on the driven assembly 130, and the elastic component 160 has a tendency to drive the driven assembly 130 to move to the unlocking position, so as to prevent the driven assembly 130 from sliding in the locking hole 510 to lock the bicycle 10 by mistakes due to accidents, such as that the driven assembly 131 breaks, the latching tongue 132 is detached from a snapping portion of the driven assembly 131 and so on, thereby avoiding the accidents while riding. In the present embodiment, two ends of the elastic component 160 abut against an inner wall of the driven block 131 and an inner wall of the housing 170, respectively, such that the elastic component 160 is compressed when the driven block 130 is disposed at the locking position, thereby realizing the elastic component 160 having a force driving the driven block 130 to move to the unlocking position.

Referring to FIG. 5, in an embodiment, a gap is defined between an inner wall of the driving block 120 disposed at the first position and an inner wall of the housing 170, the driving block 120 may move on an extending path of a path where the driving block 120 moves from the second position to the first position, such that after the driving block 120 moving to the first position, if the power source is not out of operation in time, the power source 110 may continue to drive the driving block 120 to move, and the power source 110 is not in locked rotor due to no space for the driving block 120 to move.

In the present embodiment, the length and the number of teeth 123 of the driving block 120 configured to engage with the transmission gear set 180 are limited. When the driving block 120 is configure to move on the extending path of the path where the driving block 120 moves from the second position to the first position, the teeth 123 is not engaged with the transmission gear set 180, such that the power source 110 may continue rotate, and is not in locked rotation, thereby playing a role of anti-locked rotation. Since the driving block 120 continues to move, the driven block 131 can not move due to a limitation of the first position detecting component 151, such that the driving block 120 and the driven block 131 may compress the elastic transmission component 140. When the teeth 123 is not engaged with the transmission gear set 180, the elastic transmission component 140 may drive the driving block 120 to reset a first position, thereby realizing that the teeth 123 is engaged with the transmission gear set 180 again, facilitating the lock 100 being switched to the locking state.

Referring to FIGs. 4, 7 and 8, in the present embodiment, the number of the teeth 123 of a rack disposed on the driving block 120 is four, which is not limited. In some embodiments, a distance that an engagement between the transmission gear set 180 and the teeth 123 may drive the driving block 120 to move is less than a maximum distance of the driving block 120 moving in the housing 170, such that when the driving block 120 disposed at the locking position exceeds the second position or the driving block 120 disposed at the unlocking position exceeds the first position, the teeth 123 may be not engaged with the transmission gear set 180 in time, thereby obtaining a better effect of preventing the power source 110 from being in locked rotor.

In an embodiment, a gap is defined between the driving block 120 disposed on the second position and an inner wall of the housing 170. The driving block 120 may move along an extending path of a path where the driving block moves from the first position to the second position, such that after the driving block 120 moving to the second position, if the power source is not out of operation in time, the driving block 120 may continue to drive the driving block 120 to move, and the power source 110 is not in locked rotation due to no space for the driving block 120 to move.

In the present embodiment, in the driving block 120, the length and the number of teeth 123 of the driving block 120 configured to engaged with the transmission gear set 180 is limited. When the driving block 120 moves on the extending path of the path where the driving block 120 moves from the first position to the second position, the teeth 123 is not engaged with the transmission gear set 180, such that the power source 110 may continue rotate and be not in locked rotation, thereby playing a role of anti-locked rotation. Since the driving block 120 continues to move, the driven block 131 is disposed at the unlocking position, the driven block 131 may not move due to a restriction of the housing 170, such that the driving block 120 and the driven block 131 may compress the elastic transmission component 140. When the teeth 123 is not engaged with the transmission gear set 180, the elastic transmission component 140 may drive the driving block 120 to reset to the second position, thereby realizing that the teeth 123 is engaged with the transmission gear set 180 again, facilitating the lock 100 switching to the unlocking state.

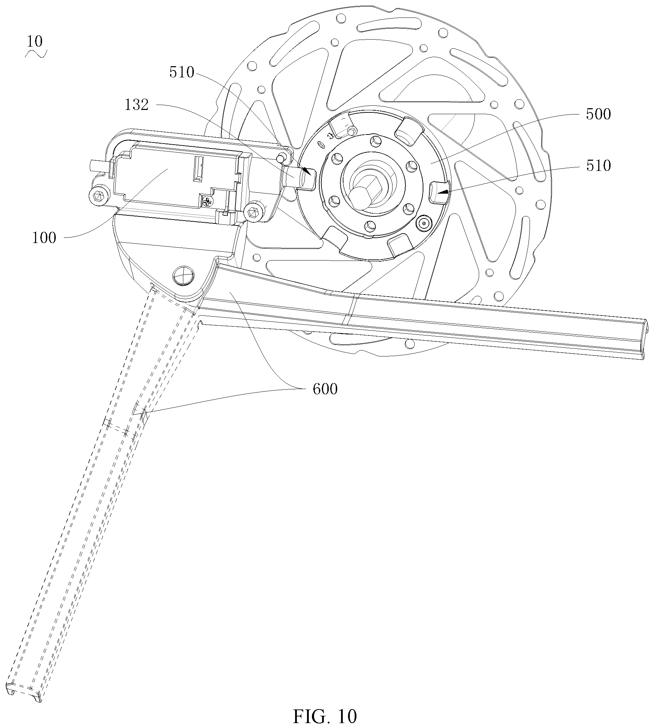

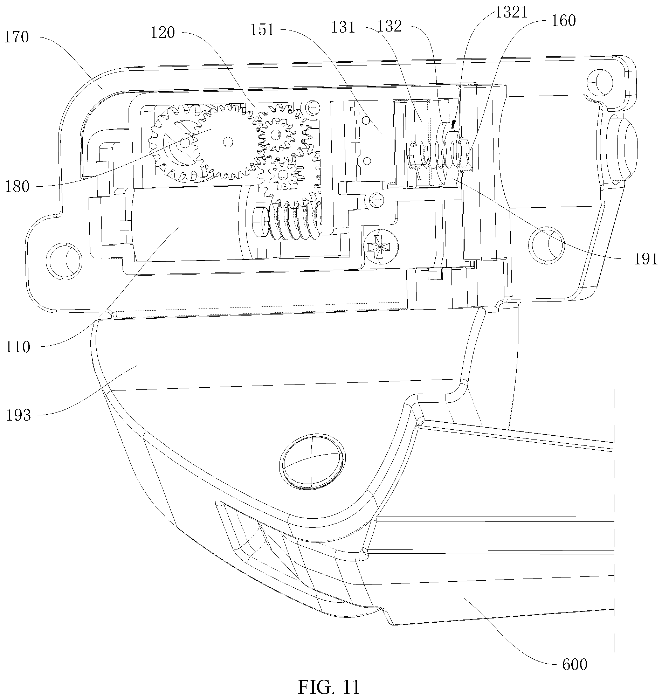

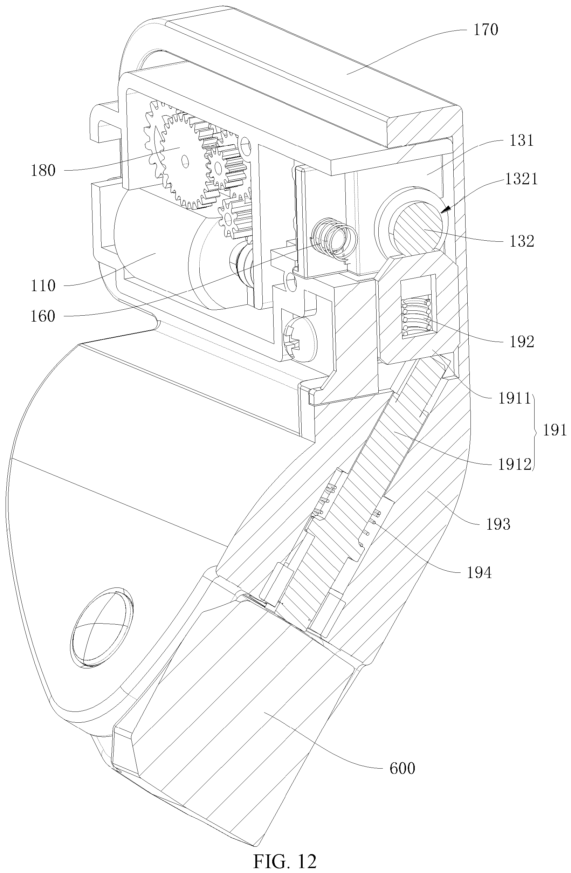

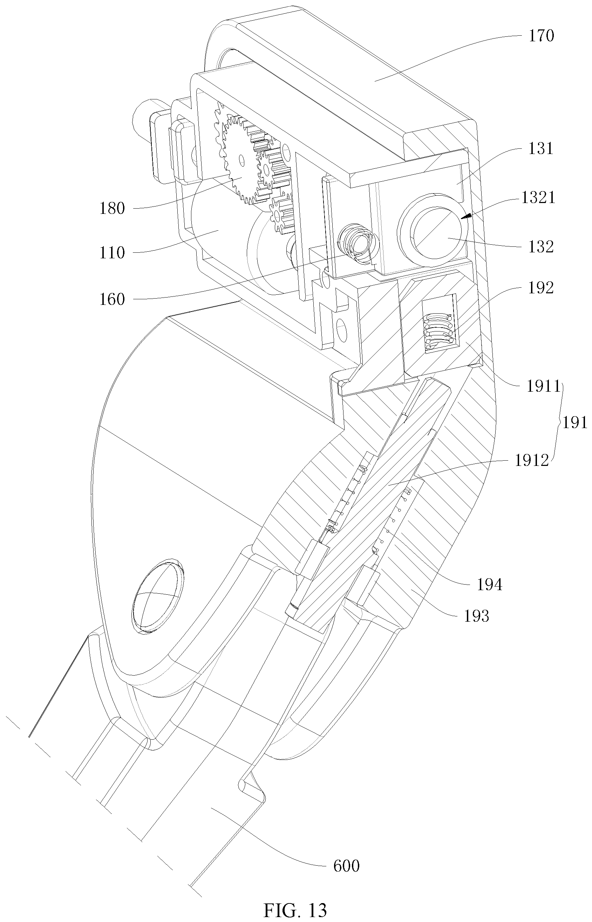

Referring to FIGs. 10 to 13, in another embodiment of the present application, a lock 100 is provided, which is substantially the same as the above embodiment, except that: referring to FIG. 11, a periphery of the latching tongue 132 is provided with a limiting groove 1321. The lock 100 further includes a movable restricting assembly 191. The restricting groove 191 is aligned with a restricting groove 1321 of the latching tongue 132 disposed at the unlocking position shown in FIG. 11. Referring to FIGs. 12 and 13, the restricting assembly 191 is configured to move relative to the latching tongue 132 to partially insert into and retract from the restricting groove 1321. When the restricting assembly 191 is partially inserted into the restricting groove 1321, the restricting assembly 191 is configured to restrict the latching tongue 132 to move, such that the latching tongue 132 is disposed at the unlocking position, resulting in avoiding the driven block 130 to lock the bicycle 10 by mistake due to that the driven block 131 breaks and so on.

In summary, compared with that the driving block 120 is rigidly connected to the driven block 131, if the driving block 120 is disposed at the first position or the second position, but the power source 110 fail to stop outputting torque to keep rotating, the elastic transmission component 140 is regarded as the transmission component to prevent the transmission gear set 180 and the teeth 123 from being squeezed to damage or the power source 110 from overloading to damage, and the elastic transmission component 140 after compressed may utilize an elastic force to make the teeth 123 and the transmission gear set 180 to reset to maintain a state of the teeth 123 engaged with the transmission gear set 180, thereby reducing damage of the power source 110 or the machine structure, resulting in prolonging a service life of the lock 100.

Referring to FIGs. 11 to 13, in an embodiment, the bicycle 10 further includes a kickstand 600 rotatably connected to the frame 200. The kickstand 600 is configured to move between a retraced position shown as a solid line in FIG. 10 and a standing position shown as a dotted line in FIG. 10. Generally speaking, when the bicycle 10 is required to move, the kickstand 600 is required to move to the retraced position. Referring to FIG. 13, the restricting assembly 191 is disposed on a path where the kickstand 600 moves from the standing position to the retracted position, such that the kickstand 600 may drive the restricting assembly 191 to partially insert into the restricting groove 1321 during a process of the kickstand 600 moving to the retracted position. So when the bicycle 10 is required to be rode, the restricting assembly 191 may restrict the latching tongue 132 to move, thereby avoiding locking the bicycle 10 by mistakes.

Referring to FIGs. 12 and 13, in an embodiment, the lock 100 further includes a first elastic reset component 192. The first elastic reset component 192 is configured to act on the restricting assembly 191 and has a tendency to drive the restricting assembly 191 to retract from the restricting groove 1321, such that when the kickstand 600 is reset to the standing position, the first elastic reset component 160 may drive the restricting assembly 191 to retract from the restricting groove 1321, thereby preventing interfering the latching tongue 132 from moving to the locking position, and avoiding the lock 100 switching to the locking state.

Referring to FIGs. 12 and 13, in the present embodiment, the restricting assembly 191 includes a transmission portion 1912 and a restricting position 1911. The transmission portion 1912 is disposed on a path where the kickstand 600 moves from the standing position to the retracted position. The kickstand 600 may drive the transmission portion 1912 to move towards the restricting position 1911 and drive the restricting assembly 191 to move to insert into the restricting groove 1321 during a process of the kickstand 600 moving to the retracted position.

Referring to FIGs. 12 and 13, in the present embodiment, the lock 100 further includes a connecting housing 193. The connecting housing 193 is connected to the housing 170. The connecting housing 193 is provided with a guiding hole configured for the transmission portion 1912 to move, such that the transmission portion 1912 moves along a preset direction.

Referring to FIGs. 12 and 13, in the present embodiment, the lock 100 further includes a second elastic reset component 194. The second elastic reset component 194 is configured to act between the transmission portion 1912 and the connecting housing 193. The second elastic reset component 194 may drive the transmission portion 1912 to reset to partially located on the path where the kickstand 600 moves from the standing position to the retracted position, such that when the kickstand 600 is switched to the retracted position next time, the kickstand 600 may still drive the transmission portion 1912 to move and drive the restricting position 1911 to insert into the restricting groove 1321.

In the lock 100, the driving block is connected to the driven block in a transmission manner by providing the elastic transmission component 140 between the driving block 120 and the driven block 131. In one hand, a lock time is not limited by that the locking hole 510 is aligned with the latching tongue 132, the lock 100 may realize a preset lock when the locking hole 510 is not aligned with the latching tongue 132, and the bicycle 10 is immediately locked when the locking disc 500 rotates, thereby ensuring a safety and improving convenience for using the lock 100. In other hand, an elastic transmission between the driving block 120 and the driven block 131 is compared with a rigid connection between the driving block 120 and the driven block 131, if the driving block 120 reaches to the first position or the second position, but the power source 110 fails to stop outputting torque to keep rotating, the elastic transmission component 140 is regarded as a transmission component to prevent the transmission gear set 180 and the teeth 123 from being squeezed to damage or the power source from overloading to damage, and the elastic transmission component 140 after being compressed may utilize an elastic force to make the teeth 123 and the transmission gear set 180 to reset to maintain a state of the teeth engaged with the transmission gear set 180, resulting in reducing damage of the power source 110 or the machine structure, and prolonging a service life of the lock 100.

The various technical features of the above embodiments can be combined in any way. In order to make the description concise, not all possible combinations of the various technical features in the above embodiments have been described. However, as long as there is no contradiction in the combination of these technical features, they should be considered within the scope of the specification.

The above embodiments only express several embodiments of the present application, and their descriptions are more specific and detailed, but should not be understood as limiting the scope of the application. It should be pointed out that for ordinary skill in the art, several modifications and improvements can be made without departing from the concept of the application, which are within the scope of protection of the application. Therefore, the scope of protection of the present application should be based on the attached claims.

## Claims

1. A lock (100), comprising:
a power source (110);
a driving block (120) connected to the power source (110) in a transmission manner, the driving block (120) capable of moving between a first position and a second position under a drive of the power source (110);
a driven assembly (130) comprising a driven block (131) and a latching tongue (132) connected to each other, the driven assembly (130) capable of moving between a locking position and an unlocking position; and
an elastic transmission component (140) connected between the driving block (120) and the driven block (131) in a transmission manner, wherein when the driving block (120) is disposed on the second position, the elastic transmission component (140) has a tendency to drive the driven assembly (130) to move to the locking position.

2. The lock (100) of claim 1, wherein when the driving block (120) moves between the first position and the second position, the driving block (120) is capable of moving along an axis of the elastic transmission component (140); and/or, when the driven assembly (130) moves between the locking position and the unlocking position, the driven assembly (130) is capable of moving along an axis of the elastic transmission component (140).

3. The lock (100) of claim 1, wherein the elastic transmission component (140) is disposed on a path where the driving block (120) moves from the first position to the second position and from the second position to the first position; and
the elastic transmission component (140) is disposed on a path where the driving block (120) moves from the locking position to the unlocking position and from the unlocking position to the locking position.

4. The lock (100) of claim 1, wherein the driven block (131) is provided with a groove (1311), a part of the elastic transmission component (140) is disposed in the groove (1311), the driving block (120) is provided with an accommodating groove (121) along an axis of the elastic transmission component (140) and an abutting groove (122) in communication with the accommodating groove (121), a part of the driven block (131) is inserted into the accommodating groove (121), and at least part of the elastic transmission component (140) protruding from the groove (1311) is located in the abutting groove (122).

5. The lock (100) of claim 4, wherein the driven block (131) comprises two positioning blocks (1312), the two positioning blocks (1312) protrudes from two groove walls of the groove (1311) opposite to each other along the axis of the elastic transmission component (140), the two positioning blocks (1312) are separated from each other along the axis of the elastic transmission component (140), and two ends of the elastic transmission component (140) are sleeved on peripheries of the two positioning blocks (1312), respectively,
a size of each of the two positioning blocks (1312) decreases along a direction from a groove wall of the groove (1311) to corresponding other of the two positioning blocks (1312).

6. The lock (100) of claim 1, further comprising a first position detecting component (151), wherein the first position detecting component (151) is disposed on a side of a path where the driven assembly (130) moves between the locking position and the unlocking position, the first position detecting component (151) is configured to be triggered when the driven assembly (130) is disposed on the unlocking position;
and/or wherein the lock (100) further comprises a second position detecting component (152), the second position detecting component (152) is disposed on a side of a path where the driven assembly (130) moves between the locking position and the unlocking position, the second position detecting component (152) is configured to be triggered when the driven assembly (130) is disposed on the unlocking position.

7. The lock (100) of claim 6, wherein the first position detecting component (151) is disposed on an extending path of a path where the driven assembly (130) moves from the locking position to the unlocking position, and the driven assembly (130) abuts against the first position detecting component (151) when the driven assembly (130) is disposed on the unlocking position.

8. The lock (100) of claim 1, further comprising an elastic component (160), wherein the elastic component (160) is configured to act on the driven assembly (130), the elastic component (160) has a tendency to drive the driven assembly (130) to move to the unlocking position.

9. The lock (100) of claim 1 or claim 3, further comprising a housing (170), wherein the driving block (120) and the driven block (131) are both disposed in the housing (170), when the driven block (131) is disposed on the locking position, at least part of the latching tongue (132) extends outside the housing (170).

10. The lock (100) of claim 9, wherein a gap is defined between the driving block (120) disposed on the first position and an inner wall of the housing (170), the driving block (120) is capable of moving along an extending path of a path where the driving block (120) moves from the second position to the first position;
and/or a gap is defined between the driving block (120) disposed on the second position and an inner wall of the housing (170), the driving block (120) is capable of moving along an extending path of a path where the driving block (120) moves from the first position to the second position.

11. The lock (100) of claim 10, further comprising a transmission gear set (180), wherein the transmission gear set (180) is connected to the power source (110) and the driving block (120) in a transmission manner, the driving block (120) is provided with teeth (123) configured to be engaged with the transmission gear set (180);
when the driving block (120) moves along the extending path of the path where the driving block (120) moves from the second position to the first position and/or from the first position to the second position, the teeth (123) is capable of being detached from the transmission gear set (180).

12. A bicycle (10), comprising a frame (200), a rear wheel (400), a hook (300) and a lock disc (500), wherein the hook (300) is connected between the frame (200) and the rear wheel (400), the lock disc (500) is coaxially and rotatably disposed with the rear wheel (400), the bicycle (10) further comprises the lock (100) of any one of claims 1 to 12, the lock (100) is connected to the hook (300), and a periphery of the lock disc (500) is provided with at least one locking hole (510) fitting with the latching tongue (132).

13. The bicycle (10) of claim 12, wherein a periphery of the latching tongue (132) is provided with a restricting groove (1321), the lock (100) further comprises a movable restricting assembly (191), the restricting assembly (191) fits with the restricting groove (1321) of the latching tongue (132) disposed at the unlocking position, the restricting assembly (191) is capable of moving relative to the latching tongue (132) to partially insert into the restricting groove (1321) and retract from the restricting groove (1321).

14. The bicycle (10) of claim 13, further comprising a kickstand (600) rotatably connected to the frame (200), wherein the kickstand (600) is capable of rotating between a retracted position and a standing position, the restricting assembly (191) is disposed on a path where the kickstand (600) moves from a standing position to a retracted position, resulting in the restricting assembly (191) is driven to partially insert into the restricting groove (1321) during a process of the kickstand (600) moving to the retracted position.

15. The bicycle of claim 13, further comprises a first elastic reset component (192), wherein the first elastic reset component (192) is capable of acting on the restricting assembly (191) and has a tendency to drive the restricting assembly (191) to retract from the restricting groove (1321).
